# EUROPÄISCHE PATENTSCHRIFT

(11) **EP 0 636 078 B1**
(45) Veröffentlichungstag und Bekanntmachung des Hinweises auf die Patenterteilung: **03.07.1996**
(21) Anmeldenummer: 93902161.4
(22) Anmeldetag: 09.01.1993
(51) Int. Cl.: B60T 8/48

(54) **HYDRAULISCHE BREMSANLAGE MIT BREMSSCHLUPF- UND ANTRIEBSSCHLUPFREGELUNG**
HYDRAULIC BRAKE SYSTEM WITH BRAKE-SLIP AND DRIVE-SLIP CONTROL
DISPOSITIF DE FREINAGE HYDRAULIQUE AVEC SYSTEME D'ANTIPATINAGE AU FREINAGE ET A L'ACCELERATION

(30) Priorität: 22.04.1992 DE 4213199
(43) Veröffentlichungstag der Anmeldung: 01.02.1995
(73) Patentinhaber: ITT Automotive Europe GmbH, D-60488 Frankfurt (DE)
(72) Erfinder: ZAVISKA, Dalibor, D-6236 Eschborn (DE); LINHOFF, Paul, D-64859 Ebertshausen (DE)
(74) Vertreter: Portwich, Peter
(86) Internationale Anmeldenummer: EP9300032
(87) Internationale Veröffentlichungsnummer: WO9321047

(56) Entgegenhaltungen:
- WO-A-91/12162
- WO-A-91/18776
- DE-A- 3 800 854
- DE-A- 3 929 464
- DE-C- 4 009 640
- FR-A- 2 658 144
- FR-A- 2 662 129
- GB-A- 2 239 913

## Beschreibung

Die Erfindung bezieht sich auf eine hydraulische Bremsanlage mit einer Einrichtung sowohl zum Regeln des Bremsschlupfes als auch des Antriebsschlupfes.

Eine Bremsanlage mit den Merkmalen des Oberbegriffs des Anspruches 1 ist aus der DE-OS 38 00 854 bekannt.

### Der technische Hintergrund auf den die Erfindung zu sehen ist, läßt sich wie folgt beschreiben:

Grundsätzlich ist es bekannt, einen übermäßigen Antriebsschlupf (die Räder drehen durch) zu verhindern, indem auf die angetriebenen Räder eine Bremskraft ausgeübt wird. Das Bremsmoment wirkt dabei dem Antriebsmoment entgegen und reduziert dieses soweit, daß das Restmoment von den Reibkräften zwischen Reifen und Fahrbahn übertragen werden kann.

Um einen optimalen Antriebsschlupf einstellen zu können, muß das Bremsmoment variiert werden können. Es wird daher vorgeschlagen, Bremsanlagen die eine Bremsschlupfregelung vorsehen, so umzugestalten, daß mit ihnen auch eine Antriebsschlupfregelung möglich ist. Das grundsätzliche Problem dabei ist, daß mit Beginn einer Antriebeschlupfregelung zunächst Druckmittel in die Bremskreise verbracht werden muß, um einen Bremsdruck aufbauen zu können, der anschließend variiert wird.

Bei einer Bremsschlupfregelung wird dieses Druckmittel durch Betätigen des Hauptzylinders vom Hauptzylinder in die Bremskreise verdrängt.

Es ist schon bekannt, die Pumpe, die in der Einrichtung zur Bremsschlupfregelung vorgesehen ist, an einen Vorratsbehälter zu legen, so daß die Pumpe zur Antriebsschlupfregelung aus dem Vorratsbehälter Druckmittel ansaugt und dieses in die Bremskreise verdrängt. Bei Hochgeschwindigkeitsantriebsschlupfregelung ist ein plötzlicher Druckaufbau erforderlich, der von Systemen ohne Druckspeicher nicht geleistet werden kann. Zudem ist bei kalter Witterung die Bremsflüssigkeit zäh, so daß die Pumpe nicht schnell genug ihre volle Leistung erbringen kann.

Es wurde daher schon vorgeschlagen (DE-OS 38 03 363) einen zuschaltbaren Hochdruckspeicher an der Druckseite der Pumpe vorzusehen. Dieser Hochdruckspeicher ist in der Regel so ausgelegt, daß er ein Volumen zur Verfügung stellt, das ausreicht, die Radbremsen der angetriebenen Räder zu füllen und in den Radbremsen einen Druck zu erzeugen, der sicher dazu führt, daß die Räder nicht durchdrehen. Dieser Druck liegt je nach Bremsanlage bei 100 bar oder mehr. Diese Vorgaben führen dazu, daß der Speicher sehr voluminös baut und zusätzliche Kosten verursacht.

In der schon genannten DE-OS 38 00 854 wird demgegenüber vorgeschlagen, einen Speicher an der Saugseite der Pumpe vorzusehen. Dieser Speicher wird von einer Vakuumdose betätigt. Er kann als Niederdruckspeicher bezeichnet werden, da er auf relativ niedrigem Druckniveau Druckmittel zur Saugseite der Pumpe bringt, die diese dann in den Bremskreis fördert. Der Speicher stellt daher nur das notwendige Druckmittelvolumen zur Verfügung. Der Druckaufbau wird durch die Pumpe hervorgerufen. Bei dieser Konstruktion hängt die Schnelligkeit des Druckaufbaues wiederum ab von der Leistungsfähigkeit der Pumpe.

Aus der DE-A 40 04 483 ist eine Bremsanlage gemäß dem Oberbegriff des Anspruchs 1 bekannt. Außer einem Niederdruckspeicher ist in dieser bekannten Bremsanlage ein Mitteldruckspeicher an die Saugseite der nicht selbstansaugenden Förderpumpe anschließbar. Die Rückförderpumpe ist selbst nicht in der Lage, Druckmittel aus dem Vorratsbehälter anzusaugen. Sie weist zwar an ihrer Druckseite eine Verbindungsleitung zum Mitteldruckspeicher auf, in welcher ein Überdruckventil angeordnet ist, über welches eine Druckentlastung der Druckseite der Rückförderpumep erfolgt, wenn der Förderdruck der Pumpe ein bestimmtes Niveau überschreitet. Der eigentliche Ladevorgang des Mitteldruckspeichers erfolgt jedoch durch mehrfache Bremspedalbetätigung des Fahrers. Indem vom Hauptzylinder Druckmittel in eine Steuerkammer einer druckbetätigten Pumpeinrichtung befördert wird, wird der zugehörige Förderkolben verschoben und befördert das verdrängte Druckmittel über ein Rückschlagventil in den Mitteldruckspeicher. Zur Füllung des Mitteldruckspeichers sind gemäß der Druckschrift zwei oder mehr Hübe des Bremspedals notwendig, weil bei einer mangelhaften Füllung des Mitteldruckspeichers im Falle einer durchzuführenden normalen pedalbetätigten Bremsung nicht alles aus dem Hauptzylinder verdrängte Druckmittel den Radbremsen zur Verfügung steht, sondern durch Verdrängung der Pumpenkolben der druckbetätigten Pumpe geschluckt wird. Ein derartige Bremsanlage birgt das Risiko, daß der Fahrer bei Fahrtantritt vergißt, diese Pedalbetätigung durchzuführen. Für die ersten Bremsungen nach Fahrtantritt besteht daher ein Sicherheitsrisiko.

Die Aufgabe der vorliegenden Erfindung besteht daher darin, eine preiswerte, platzsparende Bremsanlage zu schaffen, die ohne Sicherheitseinbußen bei einer Pedalbremsung eine auch für die Antriebsschlupfregelung bei hohen Geschwindigkeiten ausreichend schnelle Füllung der Radzylinder gewährleistet.

Diese Aufgabe wird gelöst in Verbindung mit den kennzeichnenden Merkmalen des Anspruchs 1.

Der Begriff Mitteldruckspeicher soll besagen, daß der maximale Druck dieses Speichers nicht unbedingt dem des Hochdruckspeichers aus dem Stand der Technik entspricht, daß er aber trotz allem einen Mindestdruck zur Verfügung stellt, der größer ist als der, den der Speicher gemäß der DE-OS 38 00 854 liefert.

Der Vorteil besteht darin, daß ein derartig konzipierter Speicher kein großes Bauvolumen aufweist, andererseits aber die Pumpe so rasch lädt, bzw. Druckmittel durch Saug- und Druckventile der Pumpe hindurchdrückt, daß ein schneller Druckaufbau in der Radbremse erfolgt. Der vom Mitteldruckspeicher vor der Pumpe zur Verfügung gestellte Druck sollte daher größer sein als die Summe der Widerstände im Bremssystem, also größer sein als die Summe von Druck- und Saugventil sowie den Betätigungswiderständen der Radbremse.

Da der Fülldruck durch den Öffnungsdruck des Zuschaltventils begrenzt ist, werden zudem gegenüber Systemen mit Hochdruckspeicher die bei der Regelung auftretenden Geräusche erheblich reduziert.

Der Speicher wird durch die Pumpe geladen in den Phasen, in denen keine Bremsung stattfindet. Dazu ist die Pumpe je nach Typ der Bremsanlage entweder ständig mit einem Vorratsbehälter verbunden oder aber über ein sperrbares Ventil an einen Vorratsbehälter angeschlossen. Die Druckseite der Pumpe steht über ein Überdruckventil mit dem Mitteldruckspeicher in Verbindung.

Der Ladevorgang kann nun auf unterschiedliche Weise gesteuert werden.

Eine Möglichkeit besteht darin, den Druck im Mitteldruckspeicher zu registrieren und bei Überschreiten eines vorgegebenen Drucks den Ladevorgang abzubrechen. Eine weitere Möglichkeit besteht darin, die Drehzahl der Pumpe festzuhalten, wobei ein Absinken der Drehzahl dahingehend interpretiert wird, daß der Speicher ausreichend gefüllt ist, so daß der Ladevorgang beendet werden kann. Die einfachste Möglichkeit besteht darin, ein gewisses Zeitintervall vorzugeben. Sollte der maximale Füllstand des Speichers vor Ablauf des Zeitintervalls erreicht sein, wird weiteres Druckmittel über das Überdruckventil und Zuschaltventil zur Saugseite der Pumpe gebracht.

Für den Fall, daß die Erfindung in Verbindung mit einer Bremsanlage mit Blockierregelung nach dem Rückförderprinzip eingesetzt wird, wird der Niederdruckspeicher, der das von den Radbremsen abgelassene Druckmittel aufnimmt, über ein Rückschlagventil an die Saugseite der Pumpe angeschlossen, so daß der Mitteldruckspeicher sich nicht in den Niederdruckspeicher entleeren kann.

Ein derartiges Ventil muß natürlich auch dann vorgesehen werden, wenn die Saugseite der Pumpe ständig an einen Vorratsbehälter anschließt, andernfalls würde der Mitteldruckspeicher sich in den Vorratsbehälter entleeren.

Im folgenden soll anhand von vier Bildern der Erfindungsgedanke näher erläutert werden.
- Fig. 1, 3 und 4: zeigen unterschiedliche hydraulische Schaltpläne, während in
- Fig. 2: ein Diagramm dargestellt ist, das die Entladekurve des Mitteldruckspeichers in Verbindung mit der Volumenaufnahme des Bremssystems zeigt.

Die Bremsanlage besteht aus einem Hauptzylinder 1, an den über eine sich verzweigende Bremsleitung 2 (Zweigleitung 2',2'') die Radbremsen 3',3'' angeschlossen sind. Dargestellt ist nur ein Kreis, wobei in vorliegendem Fall an dem Bremskreis die angetriebenen Hinterräder HL, HR angeschlossen sind. In Jeder Zweigleitung ist ein Einlaßventil 4 vorgesehen, das elektromagnetisch betätigt wird. In seiner Grundstellung hält es die Zweigleitung offen. Wird das Ventil umgeschaltet, so wird die Zweigleitung gesperrt. Parallel zu den Einlaßventilen 4 ist jeweils ein Rückschlagventil 5 vorgesehen, das zur Radbremse hin sperrt.

In der Hauptbremsleitung 2 ist ein Trennventil 6 vorgesehen, dies ist normalerweise offen und wird im Falle einer Antriebsschlupfregelung elektromagnetisch in die Sperrstellung geschaltet. Auch hier ist ein Rückschlagventil 7 parallel zu dem Trennventil 6 geschaltet, das zum Hauptzylinder hin sperrt.

Weiterhin vorgesehen ist eine Pumpe 8 mit Saug- und Druckventilen 9 und 10. Üblicherweise wird eine Hubkolbenpumpe verwendet, wobei Saug- und Druckventil 9, 10 als Rückschlagventile so ausgebildet sind, die jeweils in Förderrichtung öffnen.

Das Saugventil 10 der Pumpe 8 steht über eine der Rücklaufleitungen 11' und 11'' mit den Radbremsen 3' und 3'' in Verbindung. In diesen Rücklaufleitungen ist je ein Auslaßventil 12 angeordnet, daß normalerweise die Rücklaufleitung sperrt und elektromagnetisch in eine Offenstellung gebracht werden kann.

Weiterhin schließt ein Mitteldruckspeicher 13 über eine Entladeleitung 14 an das Saugventil 10 der Pumpe 8 an. In die Entladeleitung 14 ist ein Schaltventil 15 eingesetzt, das in der Grundstellung ein Überdruckventil darstellt, dessen Öffnungsdruck wenig über den maximalen Druck des Mitteldruckspeichers 13 liegt. In der Schaltstellung des Schaltventils 15 ist die Entladeleitung 14 geöffnet.

Der Mitteldruckspeicher 13 steht weiterhin über eine Ladeleitung 16 mit dem Druckventil 9 der Pumpe 8 in Verbindung. In die Ladeleitung 16 ist ein Überdruckventil 17 eingebaut, das den Druck am Ausgang der Pumpe 8 begrenzt.

Zwischen der Einmündung der Entladeleitung 14 in die Saugleitung 11 und dem Auslaßventil 12 ist ein Rückschlagventil 18 angeordnet, das zum Auslaßventil 12 hin sperrt.

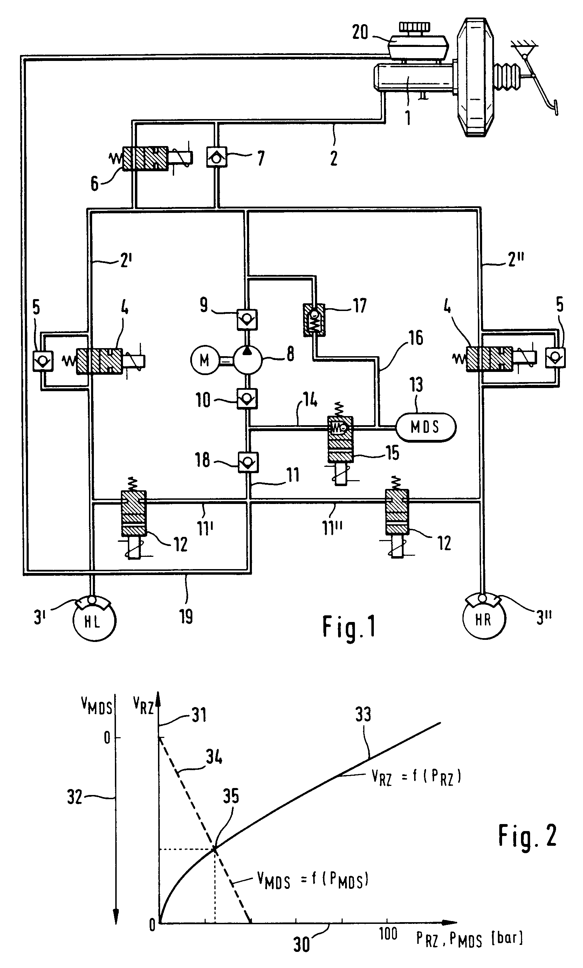

Das Ausführungbeispiel nach Fig. 1 weist eine Nachsaugleitung 19 auf, die an einem Vorratsbehälter 20 anschließt und zwischen dem Auslaßventil 12 und dem Rückschlagventil 13 in die Rücklaufleitung 11 mündet.

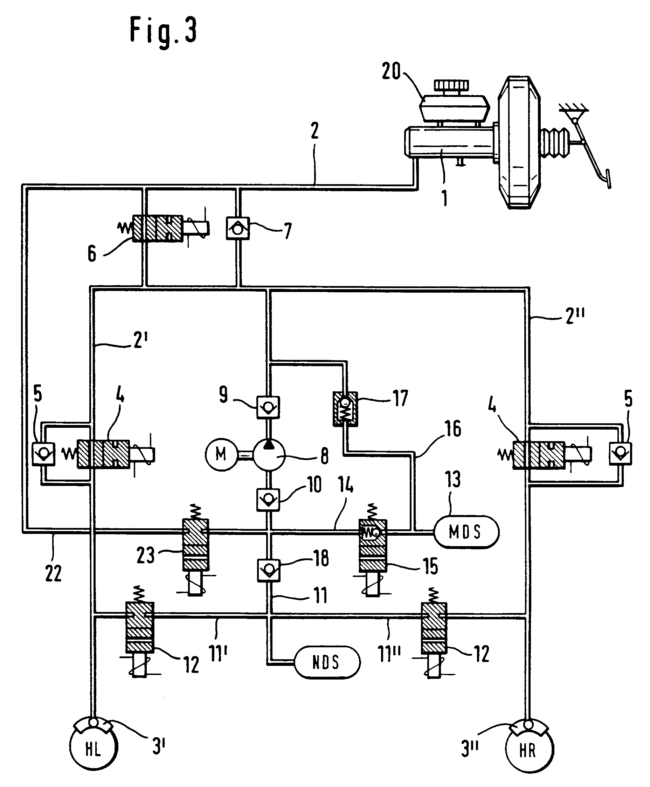

Die Bremsanlage nach Fig. 3 ist ähnlich aufgebaut, anstelle des Vorratsbehälters 20 ist ein Niederdruckspeicher 21 vorgesehen.

Aber auch hier ist eine Nachsaugleitung 22 vorhanden, die mit einer Seite an das Saugventil 10 der Pumpe 8 anschließt und mit der anderen Seite an den Hauptzylinder 1. In dieser Nachsaugleitung 22 sitzt ein Sperrventil 23, das elektromagnetisch betätigt wird. In seiner Grundstellung ist es geschlossen, in seiner Schaltstellung geöffnet.

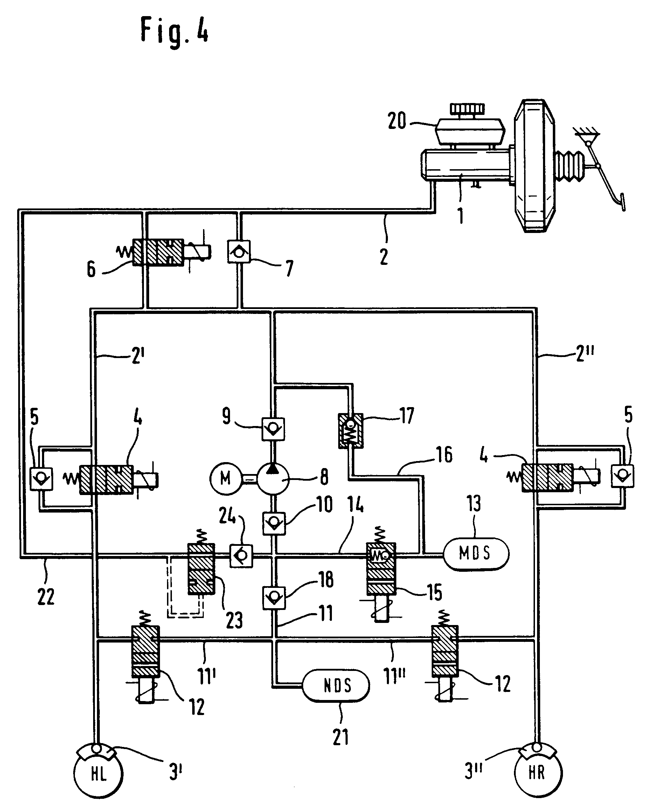

Dieses Sperrventil 23 kann gemäß der Fig. 4 auch hydraulisch betätigt werden und zwar vom Hauptzylinderdruck. In diesem Fall ist dem Sperrventil 23 aber ein Rück- schlagventil 24 nachgeschaltet, das zum Hauptzylinder hin sperrt. Wenn das Sperrventil hydraulisch betätigt wird, ist es wie dargestellt sinnvollerweise drucklos offen. Das ist möglich, weil ein Schließen des Ventils auch bei Ausfall einer Stromversorgung gewährleistet ist, und hat den Vorteil, daß das Sperrventil 23 bei jeder Pedalbremsung betätigt wird, wodurch einem Verkleben oder Verklemmen aufgrund langer Ruhezeiten vorgebeugt wird.

Es können nun verschiedene Betriebsarten unterschieden werden.

### Normalbremsung:

Die Hydraulikschaltpläne in Fig. 1,3 und 4 zeigen die Bremsanlage in der Grundstellung. Mit Betätigen des Pedals kann Druckmittel aus dem Hauptzylinder 1 über das offene Trennventil 6 dem offenen Einlaßventil 4 zu den Radbremsen 3',3'' verdrängt werden. Die geschlossenen Auslaßventile 12 verhindern, daß Druckmittel in den Vorratsbehälter 20 bzw. in den Niederdruckspeicher 21 gelangt.

Mit Lösen des Pedals wird der Druck wieder abgebaut, die Anlage arbeitet wie eine konventionelle Anlage, die keine Regelung des Schlupfes vorsieht.

### Lademodus:

Der Mitteldruckspeicher 13 muß geladen werden. Dies kann in regelmäßigen Abständen geschehen oder aber wenn ein nicht dargestellter Schalter am Mitteldruckspeicher ein Absinken des Drucks im Speicher registriert.

Üblicherweise sind auch Testzyklen für die Pumpe vorgesehen, um das Funktionieren der Pumpe zu überprüfen. Diese Testzyklen können auch zum Laden des Mitteldruckspeichers genutzt werden.

Damit ein Ladevorgang erfolgen kann, muß das Trennventil 6 sowie die Einlaßventile geschlossen werden. Das Schaltventil 23 wird geöffnet. Der Pumpenantrieb wird eingeschaltet, so daß die Pumpe nun gemäß Fig. 1 unmittelbar aus dem Vorratsbehälter bzw. gemäß Fig. 3 und 4 aus dem Hauptzylinder 1 ansaugt, wobei der Hauptzylinder, weil das Pedal nicht betätigt ist, mit dem Vorratsbehälter 20 in Verbindung steht. Das Rückschlagventil 24 und das hydraulische Sperrventil 23 nach Fig. 4 Öffnen sich dadurch, daß der Druck an der Pumpensaugseite unter den hauptzylinderseitig anstehenden Atmosphärendruck sinkt. Das Druckmittel gelangt über die Ladeleitung 16 und das Überdruckventil 17 in den Mitteldruckspeicher 13. Der Ladevorgang wird beendet, sobald der Speicher gefüllt ist, bzw. eines der Kriterien erfüllt ist, die in der Beschreibungseinleitung genannt sind.

### Bremsschlupfregelmodus:

Mittels Sensoren, die nicht dargestellt sind, wird das Drehverhalten der abzubremsenden Räder laufend erfaßt, so daß mittels einer elektronischen Auswerteeinheit (ebenfalls nicht dargestellt) festgestellt werden kann, wenn eines der Räder zu blockieren droht. In diesem Fall schaltet die Anlage in den Bremsschlupfregelmodus. Dieser beinhaltet, daß die Pumpe eingeschaltet wird. Durch Öffnen und Schließen der Ein- und Auslaßventile 4 und 12 kann nun gemäß der Fig. 1 entweder Druckmittel in den Vorratsbehälter 20 abgelassen werden, so daß der Druck in der Radbremse gesenkt wird oder aber Druckmittel mittels der Pumpe 8 den Radbremsen 3',3'' zugeführt werden, so daß den Druck in den Radbremsen steigt. Druckauf- und Druckabbau richten sich nach den Signalen, die von den Radsensoren geliefert werden. Es ist daher möglich, einen optimalen Bremsschlupf einzustellen, der es erlaubt auch die Seitenführungskräfte zu übertragen. Das Ventil 15 bleibt in seiner Sperrstellung, so daß der Mitteldruckspeicher 13 während einer Bremsschlupfregelung nicht involviert ist. Das Sperrventil 23 bleibt während einer Bremsschlupfregelung geschlossen bzw. wird vom Hauptzylinderdruck in die Sperrstellung geschaltet, so daß gemäß den Figuren 3 und 4 ein geschlossener Bremskreis vorliegt und die Anlage nach dem Rückförderprinzip arbeitet.

### Antriebsschlupfregelung:

Es kann mittels der schon erwähnten Sensoren auch der Antriebsschlupf der angetriebenen Räder beim Anfahren ermittelt werden. Droht eines der Räder durchzudrehen, so schaltet die Anlage in den Antriebsschlupfregelmodus. Dieser beinhaltet, daß das Trennventil 6 geschlossen wird und das Zuschaltventil 15 öffnet. Gleichzeitig wird der Pumpenantrieb eingeschaltet. Das Sperrventil 23 kann ggf. geöffnet werden. In der Anfangsphase der Regelung wird zunächst der Mitteldruckspeicher 13 entleert und zwar wird sein Volumen über Saug- und Druckventil 9 und 10 der Pumpe 8 über das offene Einlaßventil 4 zur Radbremse 3' bzw. 3'' gedrängt. Es erfolgt ein rascher Druckaufbau, der durch die anlaufende Pumpe 8 unterstützt wird. Die Druckregelung erfolgt nun durch Schließen und Öffnen der Ein- und Auslaßventile in ähnlicher Weise wie bei einer Bremsschlupfregelung.

Wesentlich ist, daß der Mitteldruckspeicher 13 einerseits ein ausreichendes Volumen zum Füllen der Radbremse 3' und 3'' zur Verfügung stellt, weiterhin einen Vordruck für die Pumpe 8 erzeugt, so daß diese rasch ihre volle Förderleistung entfaltet und gleichzeitig der Förderleistung der Pumpe die Entladeleistung des Mitteldruckspeichers 13 überlagert wird.

Dargestellt ist dies im Diagramm der Fig. 2. Auf der X-Achse 30 ist der Radzylinderdruck P_{RZ} bzw. der Druck des Mitteldruckspeichers P_{MDS} aufgetragen. Auf der Y-Achse 31 ist die Volumenaufnahme des Radzylinders V_{RZ} aufgetragen. Parallel dazu ist eine weitere Achse 32 vorgesehen, die den Ladezustand des Mitteldruckspeichers wiedergibt. Zumindest beim geschlossenen System ist der Ladezustand V_{MDS} des Mitteldruckspeichers reziprok zum Ladezustand der Radbremsen d.h., bei gefülltem Mitteldruckspeicher sind die Radbremsen geleert und umgekehrt.

Als durchgezogene Linie 33 ist die Volumenaufnahmekurve der Radbremse wiedergegeben. Sie entspricht in etwa einer Parabel, wobei beim Bremsdruck Null kein Volumen in der Radbremse vorhanden ist. Mit steigendem Bremsdruck steigt auch die Volumenaufnahme der Radbremse. Diese Kurven werden empirisch gewonnen und hängen vom Typ der Radbremse ab. Die gestrichelte Linie 34 zeigt den Zusammenhang zwischen der Volumenaufnahme des Mitteldruckspeichers und dem Speicherdruck. Wenn der Speicher vollständig gefüllt ist (Hilfsachse 32) ergibt sich gemäß diesem Ausführungsbeispiel ein Druck von 40 bar. Der Druck sinkt linear und ist bei geleertem Mitteldruckspeicher gleich Null (Null-Marke auf der Hilfsachse 32).

Wird nur mit Beginn einer Antriebsschlupfregelung der Mitteldruckspeicher geleert, weil das Schaltventil 15 öffnet, so baut sich entsprechend der gestrichelten Mittellinie der Druck im Mitteldruckspeicher ab, wobei er gleichzeitig geleert wird.

Die Druckmittelmenge, die aus dem Mitteldruckspeicher stammt, gelangt in die Radbremse, wodurch sich nach und nach entsprechend der Linie 33 ein Druck aufbaut, bis ein Druckausgleich im Punkt 35 stattfindet.

## Patentansprüche

1. Hydraulische Bremsanlage mit einer Einrichtung sowohl zum Regeln des Bremsschlupfes als auch des Antriebsschlupfes, mit einem Hauptzylinder (1), der mit einem Vorratsbehälter (20) verbunden ist und an den
ein Bremskreis (2) angeschlossen ist, der vom Hauptzylinder (1) mittels eines Trennventils (6) getrennt werden kann, wobei der Bremskreis (2) die Radbremsen (3',3'') für die vom Fahrzeugmotor angetriebenen Räder beinhaltet,
sowie Ventile (4,12) zum Regeln des Drucks in den Radbremsen in Abhängigkeit von Sensoren, die das Drehverhalten der Räder erfassen,
zudem eine Pumpe (8), die Druckmittel in den Bremskreis fördert,
und einen Mitteldruckspeicher (13), dessen Vordruck größer ist als die Widerstände im Bremskreis und der an der Saugseite der Pumpe (8) anschließt, wobei in der Verbindungsleitung (14) zwischen Mitteldruckspeicher (13) und Saugseite der Pumpe (8) ein Zuschaltventil (15) vorgesehen ist und wobei der Mitteldruckspeicher (13) von der Pumpe (8) über eine Ladeleitung (16) geladen wird,
die die Druckseite der Pumpe (8) mit dem Mitteldruckspeicher (13) verbindet und mit einem Überdruckventil (17) versehen ist,
dadurch **gekennzeichnet**, daß die Pumpe (8) zum Laden des Mitteldruckspeichers Druckmittel aus dem Vorratsbehälter (20) ansaugt.

2. Hydraulische Bremsanlage nach Anspruch 1, dadurch **gekennzeichnet**, daß das Zuschaltventil (15) in der Sperrstellung ein Überdruckventil vorsieht, das den maximalen Fülldruck des Mittelsdruckspeichers (13) bestimmt.

3. Hydraulische Bremsanlage nach einem der vorhergehenden Ansprüche, dadurch **gekennzeichnet**, daß eine Rückschlagventilanordnung (18,24) eine Entladung des Mitteldruckspeichers (13) nur in Förderrichtung der Pumpe (8) erlaubt.

4. Hydraulische Bremsanlage nach Anspruch 3, dadurch **gekennzeichnet**, daß in die Verbindung zwischen Saugseite der Pumpe (8) und Vorratsbehälter (20) ein elektromagnetisch betätigtes, stromlos geschlossenes Sperrventil (23) eingesetzt ist.

5. Hydraulische Bremsanlage nach Anspruch 3, dadurch **gekennzeichnet**, daß in die Verbindung zwischen Saugseite der Pumpe (8) und Vorratsbehälter (20) ein hydraulisch vom Hauptzylinderdruck betätigtes, drucklos offenes Sperrventil (23) eingesetzt ist.

## Claims

1. A hydraulic brake system with a device arranged to control both the brake slip and the traction slip, including a master cylinder (1) connected to a reservoir (20) and to a brake circuit (2) which can be separated from the master cylinder (1) by way of a separating valve (6), the brake circuit (2) comprising the wheel brakes (3', 3'') for the wheels driven by the vehicle engine, and valves (4, 12) for the control of the pressure in the wheel brakes depending on sensors which monitor the rotational behaviour of the wheels, further comprising a pump (8) which delivers pressure fluid into the brake circuit, and a medium-pressure accumulator (13) having a pilot pressure in excess of the resistances in the brake circuit and being connected to the suction side of the pump (8), wherein a switching valve (15) is provided in the connecting line (14) between the medium-pressure accumulator (13) and the suction side of the pump (8), and wherein the medium-pressure accumulator (13) is loaded by the pump (8) through a loading line (16) which connects the pressure side of the pump (8) to the medium-pressure accumulator (13) and includes a pressure-relief valve (17),
**characterized** in that the pump (8) aspirates pressure fluid from the reservoir (20) to load the medium-pressure accumulator.

2. A hydraulic brake system as claimed in claim l,
**characterized** in that in its locking position the switching valve (l5) functions as a pressure relief valve which determines the maximum filling pressure of the medium-pressure accumulator (l3).

3. A hydraulic brake system as claimed in anyone of the preceding claims,
**characterized** in that a non-return valve arrangement (l8, 24) allows an unloading of the medium-pressure accumulator (l3) exclusively in the delivery direction of the pump (8).

4. A hydraulic brake system as claimed in claim 3,
**characterized** in that, in the connection between the suction side of the pump (8) and the reservoir (20), an electromagnetically operated shut-off valve (23), closed when de-energized, is inserted.

5. A hydraulic brake system as claimed in claim 3,
**characterized** in that a shut-off valve (23), which is operated hydraulically by the master cylinder pressure and is open in the pressureless condition, is inserted in the connection between the suction side of the pump (8) and the reservoir (20).

## Revendications

1. Système de freinage hydraulique, comprenant un dispositif permettant la régulation aussi bien du glissement de freinage que du glissement de traction et un maître-cylindre (1) qui est relié à un réservoir de stockage (20) et auquel est raccordé un circuit de frein (2) qui peut être isolé du maître-cylindre (1) au moyen d'une valve d'isolement (6), tandis que le circuit de frein (2) contient les freins de roue (3', 3'') associés aux roues entraînées par le moteur du véhicule, ainsi que des valves (4, 12) servant à la régulation de la pression dans les freins de roue en fonction de capteurs qui relèvent le comportement de rotation des roues, et en outre une pompe (8), qui refoule l'agent de pression dans le circuit de frein, et un accumulateur à moyenne pression (13) dont la pression initiale est supérieure aux résistances se présentant dans le circuit de frein et qui est raccordé au côté d'aspiration de la pompe (8), une valve de mise en circuit (15) étant prévue dans la conduite de liaison (14), entre l'accumulateur à moyenne pression (13) et le côté d'aspiration de la pompe (8), et l'accumulateur à moyenne pression (13) étant chargé par la pompe (8) par l'intermédiaire d'une conduite de chargement (16) qui relie le côté de refoulement de la pompe (8) à l'accumulateur à moyenne pression (13) et est pourvue d'une valve de surpression (17), caractérisé en ce que, pour le chargement de l'accumulateur à moyenne pression, la pompe (8) aspire de l'agent de pression à partir du réservoir de stockage (20).

2. Système de freinage hydraulique selon la revendication 1, caractérisé en ce que, dans la position de blocage, la valve de mise en circuit (15) présente une valve de surpression qui détermine la pression maximale de remplissage de l'accumulateur à moyenne pression (13).

3. Système de freinage hydraulique selon l'une des revendications précédentes, caractérisé en ce qu'un agencement de valve antiretour (18, 24) ne permet un déchargement de l'accumulateur à moyenne pression (13) que dans le sens de refoulement de la pompe (8).

4. Système de freinage hydraulique selon la revendication 3, caractérisé en ce qu'une valve d'arrêt (23) à actionnement électromagnétique et fermée en l'absence de courant est insérée dans la liaison située entre le côté d'aspiration de la pompe (8) et le réservoir de stockage (20).

5. Système de freinage hydraulique selon la revendication 3, caractérisé en ce qu'une valve d'arrêt (23) actionnée hydrauliquement par la pression du maître-cylindre et ouverte en l'absence de pression est insérée dans la liaison située entre le côté d'aspiration de la pompe (8) et le réservoir de stockage (20).
